# EUROPEAN PATENT APPLICATION

(11) **EP 3 712 481 A1**
(43) Date of publication of application: **23.09.2020**
(21) Application number: 18892847.7
(22) Date of filing: 16.11.2018
(51) Int. Cl.: F16L 9/12, B01D 53/18, B01D 53/50, B01D 53/78, B32B 1/08

(54) **SPRAY PIPE, DESULFURIZATION DEVICE EQUIPPED WITH SAME, AND METHOD OF INSPECTING SAME**

(30) Priority: 20.12.2017 JP 2017243984
(71) Applicant: Mitsubishi Hitachi Power Systems, Ltd., Yokohama-shi, Kanagawa 220-8401 (JP)
(72) Inventor: YOSHIYAMA, Ryuji, Tokyo 108-8215 (JP); YAMADA, Kairi, Tokyo 108-8215 (JP); KAMIYAMA, Naoyuki, Tokyo 108-8215 (JP); KAGAWA, Seiji, Yokohama-shi, Kanagawa 220-8401 (JP); MIYACHI, Tsuyoshi, Yokohama-shi, Kanagawa 220-8401 (JP); YOSHIZUMI, Naoyuki, Yokohama-shi, Kanagawa 220-8401 (JP); SOEDA, Takuro, Yokohama-shi, Kanagawa 220-8401 (JP); USHIKU, Tetsu, Yokohama-shi, Kanagawa 220-8401 (JP)
(74) Representative: Henkel & Partner mbB
(86) International application number: PCT/JP2018/042424
(87) International publication number: WO 2019/123925

(57) **Abstract**

An object is to provide a spray pipe and a desulfurization apparatus provided with the spray pipe that facilitate determination of abrasion of the spray pipe and determination of necessity of repair and replacement of the spray pipe. The spray pipe according to the present disclosure includes: a tubular strength layer (51) that is configured of fiber-reinforced plastic; an outer abrasion resistant layer (52) that covers an outer peripheral side of the strength layer (51); and an inner abrasion resistant layer (53) that covers an inner peripheral side of the strength layer (51). The outer abrasion resistant layer (52) is a laminated body of a plurality of first abrasion resistant layers (52a to 52c), and colors of the plurality of first abrasion resistant layers (52a to 52c) are different from each other.

## Description

### [Technical Field]

The present disclosure relates to a spray pipe, a desulfurization apparatus provided with the spray pipe, and an inspection method for the desulfurization apparatus.

### [Background Art]

Flue gas systems such as boilers placed in power plants and the like include desulfurization apparatuses configured to remove sulfur oxides from flue gas using absorbents. Thus, it is possible to reduce the sulfur oxides contained in the flue gas to be discharged to the atmosphere.

PTL 1 discloses a liquid column type desulfurization apparatus in which a header pipe (spray pipe) is disposed, the header pipe being provided with an spray nozzle configured to eject upward an absorbent (slurry solution) into a tower main body where a combustion flue gas is distributed. Such a header pipe is typically made of a resin.

In the desulfurization apparatus provided with the liquid column type tower main body, the slurry solution injected from the spray nozzle is blown upward in a liquid column form and spreads at and drops from the top of blowing-up. The dropping slurry solution collides against the spray pipe.

The slurry solution that has been brought into contact with the flue gas contains gypsum having sharp shapes. Thus, if the gypsum collides against the spray pipe, the spray pipe becomes abraded. As the top height of blowing-up (the height in the solution) increases, an impact force generated when the gypsum collides against the spray pipe becomes stronger. If the concentration of gypsum in the slurry solution is higher, a larger amount of gypsum collides against the spray pipe, thereby degrading reliability due to abrasion of the spray pipe.

According to PTL 1, in order to prevent degradation of reliability due to such abrasion, abrasion resistant layers are provided on inner and outer surfaces of the spray pipe. According to PTL 1, the spray pipe is formed of a resin reinforced with glass fiber or the like. The abrasion resistant layers are formed of a resin with ceramic mixed therein.

### [Citation List]

### [Patent Literature]

[PTL 1] Japanese Unexamined Patent Application, Publication No. Hei 9-313923

### [Summary of Invention]

### [Technical Problem]

It is not easy to check abrasion conditions of the spray pipe from an appearance. Thus, it is necessary for inspection workers to perform detailed examination in periodic inspections to measure fixed points of all pipes using measurement apparatuses, so that the inspection workers can evaluate whether or not the thicknesses of the pipes decrease by comparison with the previous examination result.

The present disclosure has been made in view of such circumstances, and an object of the present disclosure is to provide a spray pipe and a desulfurization apparatus provided with the spray pipe that facilitate determination of abrasion of the spray pipe and determination of necessity of repair and replacement of the spray pipe.

### [Solution to Problem]

In order to solve the aforementioned problems, the spray pipe, the desulfurization apparatus provided with the spray pipe, and the inspection method for the desulfurization apparatus employ the following means.

According to some embodiments of the present disclosure, there is provided a spray pipe including: a tubular strength layer that is configured of fiber-reinforced plastic; an outer abrasion resistant layer that covers an outer peripheral side of the strength layer; and an inner abrasion resistant layer that covers an inner peripheral side of the strength layer, in which the outer abrasion resistant layer is a laminated body of a plurality of first abrasion resistant layers, and colors of the plurality of first abrasion resistant layers are different from each other.

Providing the plurality of first abrasion resistant layers with the different colors in the outer abrasion resistant layer enables determination of an abrasion condition from the appearance and facilitates determination of when to carry out repair/replacement or the like in a stage before the abrasion reaches the strength layer.

In the aforementioned embodiments, thicknesses of the plurality of first abrasion resistant layers are preferably equal to each other.

Setting the same thicknesses facilitates determination of an abrasion condition and enables quantitative evaluation of the amount of decrease in thickness due to the abrasion.

In the aforementioned embodiments, the outer abrasion resistant layer is preferably configured of three or more of the first abrasion resistant layers laminated.

The appearance of the outer abrasion resistant layer in which the three or more first abrasion resistant layers are laminated changes in color at least twice before the abrasion reaches the strength layer. This enables calling for attention in a stepwise manner.

In the aforementioned embodiments, the strength layer does not contain a coloring pigment.

Not coloring the strength layer enables checking of whether or not air bubbles have been generated in the strength layer.

In the aforementioned embodiments, the inner abrasion resistant layer is preferably a laminated body of a plurality of second abrasion resistant layers, and colors of the plurality of second abrasion resistant layers are preferably different from each other.

An absorbing solution containing gypsum flows in the spray pipe. At that time, the gypsum comes into contact with the inside of the spray pipe and causes abrasion of the inner abrasion resistant layer. Providing the plurality of second abrasion resistant layers with different colors as the inner abrasion resistant layer enables determination of not only the abrasion condition outside the spray pipe but also the abrasion condition inside the spray pipe from the appearance.

The amount of abrasion on the outer peripheral side of the spray pipe is larger than the amount of abrasion on the inner peripheral side of the spray pipe, due to strength of an impact force. Thus, the outer abrasion resistant layer is preferably thicker than the inner abrasion resistant layer.

According to another embodiment of the present disclosure, there is provided a desulfurization apparatus including: a liquid column type absorption tower in which a plurality of any of the aforementioned spray pipes are disposed along an axial line in a horizontal direction.

According to the desulfurization apparatus in which the plurality of spray pipes each provided with the outer abrasion resistant layer are disposed along the axial line in the horizontal direction, it is possible to check abrasion distribution in a direction of a horizontal plane from the appearance.

According to other embodiments of the present disclosure, there is provided an inspection method for the desulfurization apparatus, the method including: observing a color of an appearance of the outer abrasion resistant layer of the spray pipe according to any of the aforementioned spray pipes and determining an abrasion state on the basis of the color.

### [Advantageous Effects of Invention]

The present disclosure provides a spray pipe and a desulfurization apparatus provided with the spray pipe that facilitate determination of abrasion of the spray pipe and determination of necessity of repair and replacement of the spray pipe by providing (outer or inner) abrasion resistant layers with different colors. Such a spray pipe and a desulfurization apparatus provided with the spray pipe facilitate maintenance since it is possible to evaluate the amount of decrease in thickness due to abrasion from appearances at the time of inspection.

### [Brief Description of Drawings]

[Fig. 1] Fig. 1 is a vertical sectional view illustrating an overview configuration of a desulfurization apparatus.
[Fig. 2] Fig. 2 is a plan view of a spray pipe illustrated in Fig. 1 when seen from the upper side.
[Fig. 3] Fig. 3 is a side view of an arbitrary spray pipe.
[Fig. 4] Fig. 4 is a partial sectional view of a pipe portion according to an embodiment.
[Fig. 5] Fig. 5 is a partial sectional view of a pipe portion according to Modified Example 1.
[Fig. 6] Fig. 6 is a partial sectional view of a pipe portion according to Modified Example 2.
[Fig. 7] Fig. 7 is a partial sectional view of a pipe portion according to Modified Example 3.
[Fig. 8] Fig. 8 is a partial sectional view of a pipe portion according to Modified Example 4.

### [Description of Embodiments]

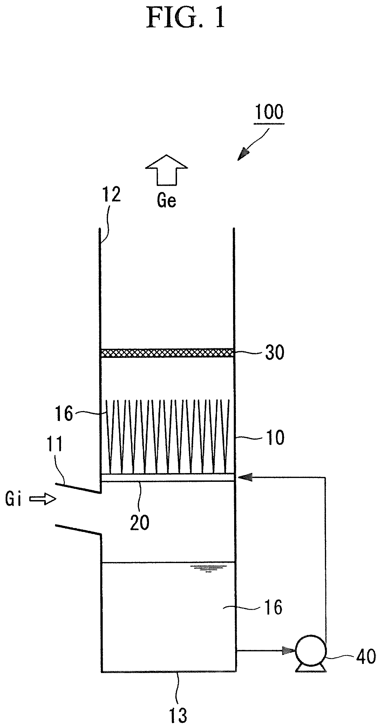

Hereinafter, a spray pipe according to an embodiment of the present disclosure, a desulfurization apparatus provided with the spray pipe, and an inspection method for the desulfurization apparatus will be described with reference to the drawings. Fig. 1 illustrates, as an example, an overview configuration of a liquid column type desulfurization apparatus 100.

The desulfurization apparatus 100 includes a liquid column type absorption tower 10, spray pipes 20, a demister 30, and a circulation pump 40.

The absorption tower 10 is a box-shaped casing that is formed to extend in the vertical direction and serves as a path of flue gas. The absorption tower 10 guides flue gas Gi upward in the vertical direction, the flue gas Gi containing sulfur oxides and being introduced from a flue gas introduction portion 11 formed in a side surface of the absorption tower 10. The absorption tower 10 discharges introduced flue gas Gₑ from a flue gas discharge portion 12 formed on the upper side of the absorption tower 10 in the vertical direction.

The spray pipes 20 are tubular members disposed inside the absorption tower 10 along the horizontal direction. As illustrated in Fig. 1, the spray pipes 20 can eject an absorbing solution upward in the vertical direction. The ejected absorbing solution 16 comes into gas-liquid contact with the flue gas Gi that has been introduced from the flue gas introduction portion 11.

The absorbing solution 16 is a liquid containing lime. If the absorbing solution 16 comes into contact with the flue gas Gi, the sulfur oxides contained in the flue gas Gi react with the lime, thereby generating gypsum. In other words, the sulfur oxides contained in the flue gas Gi are removed by the lime gypsum method in the absorption tower. The absorbing solution 16 ejected from the spray pipes 20 is retained in a bottom portion 13 of the absorption tower 10. The absorbing solution 16 retained in the bottom portion 13 is supplied to the spray pipes 20 by the circulation pump 40.

The demister 30 is, for example, a folded plate-type demister. The demister 30 is adapted to remove mist of the absorbing solution generated inside the absorption tower 10 using physical collision.

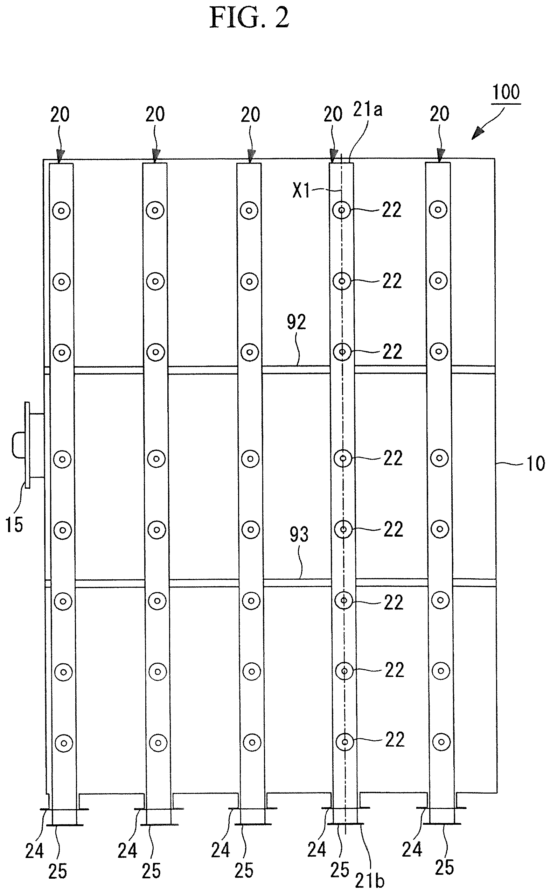

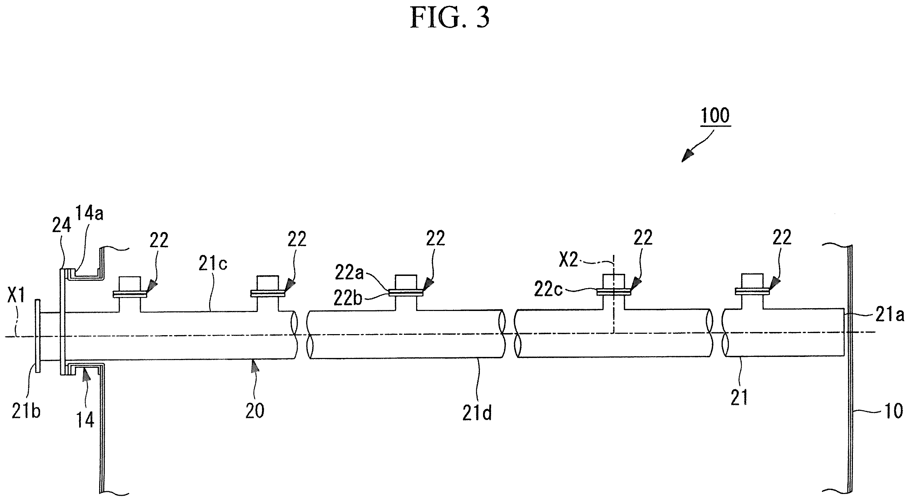

Fig. 2 is a plan view of the spray pipe when seen from the upper side. Fig. 3 is a side view of the spray pipe.

Each of the spray pipes 20 is provided with an attachment flange 24 and a supply port 25. The attachment flange 24 is a member to attach the spray pipe 20 to a flange 14a of an opening portion 14 provided in the absorption tower 10. The attachment flange 24 is attached to the flange 14a of the opening portion 14 in the absorption tower 10 with a plurality of fastening tools (not illustrated).

Note that, in the above description, the attachment flange 24 of the spray pipe 20 is attached to the flange 14a of the opening portion 14 in the absorption tower 10, but another aspect may be employed. In a case in which the opening portion 14 in the absorption tower 10 is not provided with the flange 14a, for example, the attachment flange 24 may be attached directly to a side wall of the absorption tower 10 using a fastening tool.

Support beams 92 and 93 are attached below a plurality of the spray pipes 20, the support beams 92 and 93 perpendicularly intersecting the spray pipes 20. Both ends of the support beams 92 and 93 are connected to the side surfaces of the absorption tower 10. The support beams 92 and 93 are configured to support the spray pipes 20 from the side of a lower end portion 21d of a pipe portion 21 in the vertical direction.

A manhole 15 that allows workers to pass therethrough is provided in a side surface of the absorption tower 10. The manhole 15 can be used in a case in which components and the like for maintenance are carried from the outside to the inside of the absorption tower 10 and in a case in which used components and the like are carried from the inside to the outside of the absorption tower 10.

As illustrated in Figs. 2 and 3, each of the spray pipes 20 has a pipe portion 21 and a plurality of nozzle portions 22.

The pipe portion 21 is a tubular member that linearly extends from a proximal end portion 21b to a distal end portion 21a along an axial line X1 in the horizontal direction, the distal end portion 21a being closed. The supply port 25 to which the absorbing solution is supplied from the circulation pump 40 is provided at the proximal end portion 21b of the pipe portion 21. Since the distal end portion 21a of the pipe portion 21 is closed, the absorbing solution supplied from the supply port 25 to the inside of the pipe portion 21 is guided to the plurality of nozzle portions 22. The length of the pipe portion 21 from the proximal end portion 21b to the distal end portion 21a along the axial line X1 is 3 m or greater and 20 m or less. Also, the outer diameter of the pipe portion 21 is 200 mm or greater and 400 mm or less.

The plurality of nozzle portions 22 are members disposed at a plurality of locations in the upper end portion 21c of the pipe portion 21 in the vertical direction at equal intervals along the axial line X1. Each of the nozzle portions 22 has a spray nozzle 22a, a nozzle holder 22b, and a gasket 22c.

The spray nozzle 22a is a member that guides the absorbing solution 16 upward in the vertical direction along an axial line X2, the absorbing solution 16 being distributed in the pipe portion 21 in the horizontal direction along the axial line X1. The spray nozzle 22a ejects the absorbing solution 16 upward in the vertical direction, the absorbing solution 16 being supplied from the circulation pump 40. Then, the spray nozzle 22a brings the flue gas Gi and the absorbing solution 16 into gas-liquid contact with each other inside the absorption tower 10. The spray nozzle 22a is formed of SiC (silicon carbide), for example.

The nozzle holder 22b is a member attached to the upper end portion 21c of the pipe portion 21 and formed into a cylindrical shape along the axial line X2 in the vertical direction. Inside the nozzle holder 22b, a flange is formed at an upper end of the nozzle holder 22b into which a lower end side of the spray nozzle 22a is inserted. A flange having the same shape as the flange of the nozzle holder 22b is formed at the spray nozzle 22a. The flange of the spray nozzle 22a and the flange of the nozzle holder 22b are fastened to each other with a plurality of fastening tools (not illustrated) in a state in which the annular gasket 22c is pinched therebetween.

In the embodiment, the pipe portion 21 of the spray pipe 20 and the nozzle holder 22b of the nozzle portion 22 are made of fiber-reinforced plastic (FRP) and are integrally molded.

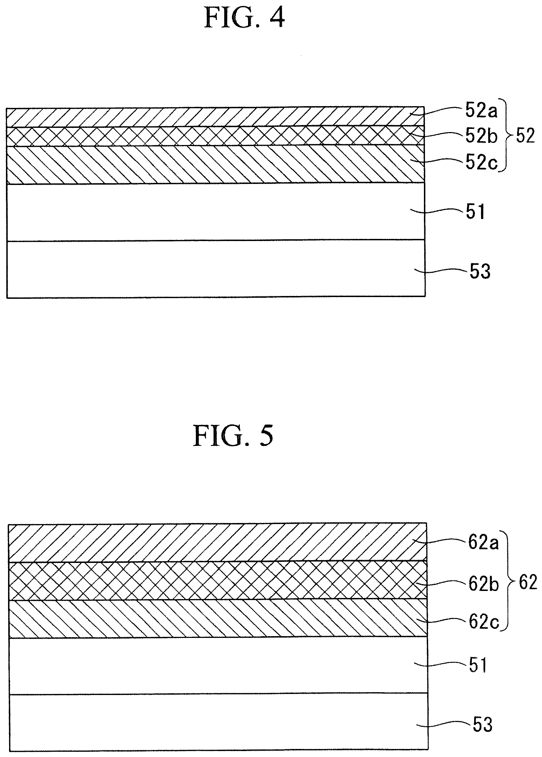

Hereinafter, the pipe portion 21 will be described in detail. FIG. 4 illustrates a partial sectional view of the pipe portion 21. In the drawing, the upper side in the paper surface represents the outside of the pipe portion 21 while the lower side in the paper surface represents the inside of the pipe portion 21.

The pipe portion 21 includes a strength layer 51 that is made of FRP, an outer abrasion resistant layer 52 that covers the outer surface of the strength layer 51, and an inner abrasion resistant layer 53 that covers the inner surface of the strength layer 51.

The strength layer 51 has a tubular shape and is configured of reinforcing fiber and a matrix resin. The reinforcing fiber is organic resin fiber such as glass fiber, carbon fiber, or polyester fiber. The matrix resin is an unsaturated polyester-based resin, a vinyl ester-based resin, or an epoxy-based resin. In particular, FRP made of glass fiber and an unsaturated polyester-based resin or a vinyl ester-based resin is preferably used. The strength layer 51 may have a configuration of a single layer or a configuration in which a plurality of layers are laminated.

The strength layer 51 is preferably not colored; that is, the strength layer 51 preferably does not contain a coloring pigment. The strength layer that is not colored has a brownish transparent color. The transparent strength layer 51 enables checking of presence of air bubbles from the appearance. If air bubbles are mixed therein, this leads to degradation of strength of the strength layer 51.Thus, the presence of air bubbles can preferably be checked from the appearance.

The outer abrasion resistant layer 52 has a structure in which a plurality of first abrasion resistant layers (52a to 52c) are laminated. The thickness of the outer abrasion resistant layer 52 is 0.01 mm or greater and 20 mm or less.

The first abrasion resistant layers (52a to 52c) include a base resin, a reinforced base material, and ceramics.

The base resin is a thermosetting resin. As the thermosetting resin, an unsaturated polyester-based resin, an epoxy-based resin, or the like can be used. As the base resin, the same matrix resin as that of the strength layer 51 can be used.

The reinforced base material is glass fiber in a mat or cloth state.

Ceramic is a substance having higher hardness than gypsum particles that can be contained in the absorbing solution (slurry solution) 16. As the ceramic, alumina, silicon carbide, tungsten carbide, or zirconia, for example, is preferably used.

The content of ceramic in the first abrasion resistant layers (52a to 52c) can appropriately be set in consideration of characteristics, the height of blowing-up, and the like of the absorbing solution 16. The appropriate content of ceramic is 5% by weight to 90% by weight and is preferably 10% by weight to 70% by weight. By setting the content of ceramic within the aforementioned range, abrasion occurring when gypsum collides against the surfaces of the spray pipes is significantly curbed even under a condition that the dropping speed of the absorbing solution 16 is high or a condition that the concentration of gypsum in the absorbing solution 16 is greater than 15% by weight. In a case in which the content of ceramic is less than 5% by weight, the amount of abrasion due to dropping of the blowing-up absorbing solution 16 increases under a condition that the height of the liquid column is 1 m or greater. In a case in which the content of ceramic is greater than 90% by weight, it is difficult to carry out construction, and construction costs increase.

The plurality of first abrasion resistant layers (52a to 52c) laminated as the outer abrasion resistant layer 52 have different colors layer by layer. Although "different colors" means that the colors belong to different color systems, the present invention is not limited thereto. "Different colors" may include differences in color concentration to such an extent that an observer can visually clearly distinguish the differences. To have different colors, the arbitrary first abrasion resistant layers (52a to 52c) may include arbitrary coloring pigments. The first abrasion resistant layers (52a to 52c) that does not contain any coloring pigment has a white color originated from the ceramic.

The inner abrasion resistant layer 53 has a structure that includes a single second abrasion resistant layer or a structure in which a plurality of second abrasion resistant layers are laminated. In Fig. 4, the inner abrasion resistant layer 53 is configured of a single second abrasion resistant layer. The thickness of the inner abrasion resistant layer is 0.01 mm or greater and 20 mm or less.

The second abrasion resistant layer includes a base resin, a reinforced base material, and ceramic. A base resin, a reinforced base material, and a ceramic that are similar to those in the first abrasion resistant layers (52a to 52c) can be used. However, the appropriate content of ceramic is 1% by weight to 70% by weight, preferably 5% by weight to 70% by weight. If the content of ceramic is less than 1% by weight, the flowing speed of the absorbing solution flowing inside the spray pipes is 2 m/sec or greater. Under a condition that the concentration of gypsum in the absorbing solution is 15% or greater by weight, the amount of abrasion increases. Since the amount of abrasion of the inner surface is typically smaller than that of the outer surface, sufficient abrasion resistant is obtained with the content of ceramic of about 70% by weight.

Hereinafter, a method for manufacturing the pipe portion according to the embodiment will be described.

First, a material of the second abrasion resistant layer is applied to an outer surface of a mold produced so as to have a dimension that conforms to the inner dimension of the pipe portion 21. For the application, a trowel, a brush, a spray device, or the like is used.

A strength layer material obtained by immersing mat, cloth, or roving fiber made of reinforcing fiber with a matrix resin is attached to or wound around the material of the second abrasion resistant layer applied to the outer surface of the mold, through hand lay-up, winding, or the like.

Then, materials of the first abrasion resistant layers with different colors are applied with predetermined thicknesses in order onto the outer surface of the strength layer material. Thereafter, the matrix resin and the base resin are hardened. In this manner, the pipe portion is obtained.

Colors of the first abrasion resistant layer 52a, the first abrasion resistant layer 52b, and the first abrasion resistant layer 52c are different from each other. For example, by adding a red coloring pigment to the first abrasion resistant layer 52a, adding a yellow coloring pigment to the first abrasion resistant layer 52b, and adding a blue coloring pigment to the first abrasion resistant layer 52c, different colors are made to distinguish the layers visually. For example, by not adding any color pigment to the first abrasion resistant layer 52a, and adding coloring pigments with different colors to the first abrasion resistant layer 52b and the first abrasion resistant layer 52c, different colors may be made. The colors of the layers are not limited to the aforementioned colors.

If gypsum comes into contact with the outer surface of the pipe portion 21, the outer abrasion resistant layer 52 becomes abraded. If a certain amount of abrasion occurs in the outer abrasion resistant layer 52, the color of the appearance changes. According to the embodiment, it is possible to easily check an abrasion progress condition from the appearance by applying different colors to the first abrasion resistant layers (52a to 52c) in the outer abrasion resistant layer 52. The change in color serves as an index for a timing of repair/replacement of the spray pipe. There are a plurality of first abrasion resistant layers (52a to 52c), and different colors are applied thereto, so that the timing of repair and replacement can be determined in a stepwise manner before the abrasion reaches the strength layer. This is advantageous for maintenance of a flue-gas desulfurization apparatus.

According to the absorption tower 10 in which a plurality of the spray pipes 20 processed under the same conditions are disposed with the outer abrasion resistant layers 52, it is possible to check abrasion amount distribution in the direction of the horizontal plane from the appearance.

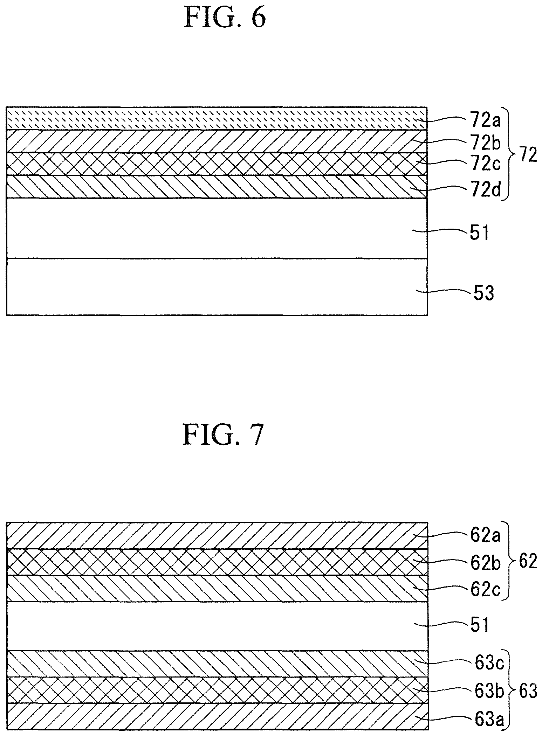

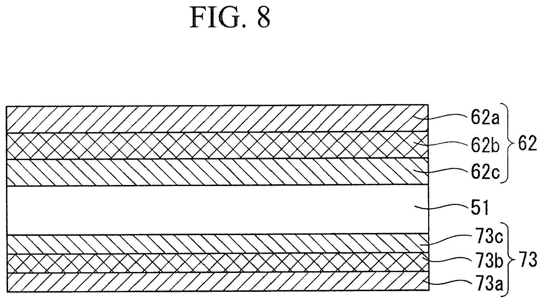

Hereinafter, modified examples of the pipe portion will be described with reference to Figs. 5 to 8. Fig. 5 is a partial sectional view of a pipe portion according to Modified Example 1. Fig. 6 is a partial sectional view of a pipe portion according to Modified Example 2. Fig. 7 is a partial sectional view of a pipe portion according to Modified Example 3. Fig. 8 is a partial sectional view of a pipe portion according to Modified Example 4. In Figs. 5 to 8, the upper side in the paper surface represents the outside of the pipe portion while the lower side in the paper surface represents the inside of the pipe portion. Description of elements that are common to those in the aforementioned embodiment will be omitted.

### (Modified Example 1)

In Modified Example 1 illustrated in Fig. 5, the pipe portion is designed such that the thicknesses of first abrasion resistant layers (62a to 62c) laminated in an outer abrasion resistant layer 62 are the same.

The thicknesses of the first abrasion resistant layers (62a to 62c) are equal to each other. Although it is better that the thicknesses of the first abrasion resistant layers (62a to 62c) are uniform in planes, it is only necessary for the thicknesses of the first abrasion resistant layers (62a to 62c) to be equal to each other at least at fixed-point observation positions in a case in which fixed-point periodic inspection of the spray pipes is carried out.

Laminating the first abrasion resistant layers with different colors and with the same thicknesses facilitates determination of an abrasion condition. In a case in which the first layer (first abrasion resistant layer 62a) becomes abraded in two years, for example, it is possible to predict that the next layer (first abrasion resistant layer 62b) may also be abraded in two years. Also, setting the thickness enables quantitative evaluation of the amount of decrease in thickness due to abrasion at the time of periodic inspection.

### (Modified Example 2)

In Modified Example 2, an outer abrasion resistant layer has three or more first abrasion resistant layers. In an outer abrasion resistant layer 72 of the pipe portion illustrated in Fig. 6, four first abrasion resistant layers (72a to 72d) are laminated.

Laminating three or more first abrasion resistant layers enables calling for attention in a stepwise manner. For example, it is possible to call for attention before abrasion reaches the strength layer 51 by issuing "caution" in a case in which the first abrasion resistant layer 72a that is an outermost layer becomes abraded and issuing "warning" in a case in which the first abrasion resistant layer 72b becomes abraded.

### (Modified Example 3)

In Modified Example 3 illustrated in Fig. 7, second abrasion resistant layers (63a to 63c) in an inner abrasion resistant layer 63 are colored to have different colors similarly to first abrasion resistant layers (62a to 62c) in an outer abrasion resistant layer 62.

In a pipe portion, the first abrasion resistant layer 62c, the first abrasion resistant layer 62b, and the first abrasion resistant layer 62a are laminated in order on the outer surface of the strength layer 51. The second abrasion resistant layer 63c, the second abrasion resistant layer 63b, and the second abrasion resistant layer 63a are laminated in order on the inner surface of the strength layer 51. The first abrasion resistant layers and the second abrasion resistant layers disposed symmetrically with the strength layer interposed therebetween are preferably colored with the same colors.

Coloring the second abrasion resistant layers to have different colors enables evaluation of the amount of decrease in thickness due to abrasion inside the pipe portion at the time of periodic inspection.

### (Modified Example 4)

In Modified Example 4 illustrated in Fig. 8, different colors are applied to second abrasion resistant layers (73a to 73c), and the thickness of an inner abrasion resistant layer 73 is set to be thinner than the thickness of an outer abrasion resistant layer 62 similarly to Modified Example 3.

### [Reference Signs List]

10 Absorption tower
11 Flue gas introduction portion
12 Flue gas discharge portion
13 Bottom portion
14 Opening portion
14a Flange
15 Manhole
16 Absorbing solution
20 Spray pipe
21 Pipe portion
21a Distal end portion
21b Proximal end portion
21c Upper end portion
21d Lower end portion
22 Nozzle portion
22a Spray nozzle
22b Nozzle holder
22c Gasket
24 Attachment flange
25 Supply port
30 Demister
40 Circulation pump
51 Strength layer
52, 62, 72 Outer abrasion resistant layer
52a, 52b, 52c, 62a, 62b, 62c, 72a, 72b, 72c, 72d First abrasion resistant layer
53, 63, 73 Inner abrasion resistant layer
63a, 63b, 63c, 73a, 73b, 73c Second abrasion resistant layer
92, 93 Support beam
100 Desulfurization apparatus

## Claims

1. A spray pipe comprising:
a tubular strength layer that is configured of fiber-reinforced plastic;
an outer abrasion resistant layer that covers an outer peripheral side of the strength layer; and
an inner abrasion resistant layer that covers an inner peripheral side of the strength layer,
wherein the outer abrasion resistant layer is a laminated body of a plurality of first abrasion resistant layers, and
colors of the plurality of first abrasion resistant layers are different from each other.

2. The spray pipe according to claim 1,
wherein thicknesses of the plurality of first abrasion resistant layers are equal to each other.

3. The spray pipe according to claim 1 or 2,
wherein the outer abrasion resistant layer is configured of three or more of the first abrasion resistant layers laminated.

4. The spray pipe according to any one of claims 1 to 3,
wherein the strength layer does not contain a coloring pigment.

5. The spray pipe according to any one of claims 1 to 4,
wherein the inner abrasion resistant layer is a laminated body of a plurality of second abrasion resistant layers, and
colors of the plurality of second abrasion resistant layers are different from each other.

6. The spray pipe according to any one of claims 1 to 5,
wherein the outer abrasion resistant layer is thicker than the inner abrasion resistant layer.

7. A desulfurization apparatus comprising:
a liquid column type absorption tower in which a plurality of the spray pipes according to any one of claims 1 to 6 are disposed along an axial line in a horizontal direction.

8. An inspection method for the desulfurization apparatus according to claim 7, the method comprising:
observing a color of an appearance of the outer abrasion resistant layer of the spray pipe and determining an abrasion state on the basis of the color.
